# EUROPÄISCHE PATENTSCHRIFT

(11) **EP 0 407 834 B1**
(45) Veröffentlichungstag und Bekanntmachung des Hinweises auf die Patenterteilung: **04.10.1995**
(21) Anmeldenummer: 90112432.1
(22) Anmeldetag: 29.06.1990
(51) Int. Cl.: C08L 83/04, C08L 75/04, C08L 101/00, C08G 18/61

(54) **Polysiloxandispersion, Verfahren zu ihrer Herstellung und ihre Verwendung**
Polysiloxane dispersion, process for making it and use thereof
Dispersion de polysiloxanes, son procédé de fabrication et son emploi

(30) Priorität: 05.07.1989 DE 3922079
(43) Veröffentlichungstag der Anmeldung: 16.01.1991
(73) Patentinhaber: hanse chemie GmbH, D-21502 Geesthacht (DE)
(72) Erfinder: Pyrlik, Manfred, Dr., D-2055 Wohltorf (DE); Block, Hermann, Dipl.-Chem., D-2127 Echem (DE)
(74) Vertreter: Schulmeyer, Karl-Heinz, Dr.

(56) Entgegenhaltungen:
- EP-A- 0 000 349
- EP-A- 0 260 559
- EP-A- 0 266 513
- FR-A- 2 523 588
- GB-A- 2 073 219

## Beschreibung

Die Erfindung betrifft eine Polysiloxandispersion, ein Verfahren zu ihrer Herstellung und ihre Verwendung als Vorprodukt zur Herstellung von silikonmodifizierten thermoplastischen, duroplastischen oder elastomeren Kunststoffen.

Kombinationsprodukte von Polyorganosiloxanen mit kohlenstofforganischen Verbindungen, z.B. Polyolen, Polyethern und Polyestern, sind bereits bekannt. Hierbei handelt es sich jedoch in der Regel um Copolymere, bei denen Polysiloxanketten mit dem kohlenstofforganischen Polymer hauptvalenzmäßig verknüpft sind. Solche Produkte werden in der Monographie "Chemie und Technologie der Silikone" von W. Noll, Weinheim/Bergstraße 1968, Seiten 317ff. beschrieben. Ferner sind aus DE-A-25 12 632 Copolymere aus Diolen und Polyolen mit Polyorganosiloxanen bekannt. Man erhält Polysiloxanole, die zum Modifizieren von Urethan- oder Epoxidharzen vorgeschlagen werden. Es hat sich jedoch gezeigt, daß bei dieser Art der Modifizierung die Polysiloxane homogen, d.h. molekulardispers in dem Polymeren verteilt sind, was sich häufig nachteilig auf die mechanische Festigkeit und die Chemikalienbeständigkeit der resultierenden Kunststoffe auswirkt.

Ferner sind Kombinationen von Polyorganosiloxanen mit Polyethern oder Polyestern bekannt, die disperse Systeme bilden, bei denen die Polyorganosiloxan-Komponente die äußere Phase und die kohlenstofforganische Komponente die disperse Phase bilden. So sind aus EP-A-0058340 organische Mehrkomponentendispersionen bekannt, die aus Polyorganosiloxan-Polyether-Polyester-Pfropfcopolymeren als disperser Phase und Polyorganosiloxanen als äußerer Phase bestehen. Hierbei handelt es sich demnach um modifizierte Polyorganosiloxane und nicht um polyorganosiloxan-modifizierte Polyether oder Polyester.

In EP-A-0304946 wird ein Zusatzmaterial aus feinzerteiltem Silikonkautschuk mit einem Teilchendurchmesser von 1 mm oder weniger beschrieben, das durch Dispergieren einer härtbaren Silikonkautschukzusammensetzung, die ein spezifisches Silan oder dessen partielle Hydrolyseprodukte in freier Form oder chemisch an den Silikonkautschuk gebunden enthält, in Wasser hergestellt wird. Das Silan besitzt einen endständigen ungesättigten Alkenylrest, gegebenenfalls mit einer funktionellen Gruppe, wie Epoxy-, Amino-, Acryloxy-, Methacryloxy- oder Mercaptogruppe. Dieses Zusatzmaterial soll zur Verbesserung der physikalischen Eigenschaften organischen Harzen und Synthesekautschuken beigemischt werden.

Schließlich sind aus DE-A-36 34 084 Suspensionen mit elastomeren Polyorganosiloxanen als disperser Phase und Reaktionsharzen, die zu Duroplasten verarbeitbar sind, als äußerer Phase bekannt, die z.B. als Vorprodukte zur Herstellung von duroplastischen Formmassen, Isolierstoffen und Schichtpreßstoffen geeignet sind.

Der Erfindung liegt die Aufgabe zugrunde, geeignete silikonhaltige Vorprodukte zu schaffen, die mit zahlreichen Kunststofftypen gut verträglich sind, eine gute Verarbeitbarkeit gewährleisten und vielgestaltige Anwendungsmöglichkeiten eröffnen, so daß mit ihrer Hilfe sehr verschiedenartige silikonmodifizierte Kunststoffe, und zwar sowohl thermoplastische als auch duroplastische und elastomere Kunststoffe, mit verbesserten physikalischen und chemischen Eigenschaften hergestellt werden können. Hierbei sollen erwünschte Eigenschaften der Silikone, wie thermische Stabilität, bei den resultierenden Kunststoffen erhalten bleiben, während unerwünschte Eigenschaften der Silikone, wie geringe mechanische Festigkeit, in den silokonmodifizierten Kunststoffen möglichst nicht vorliegen sollen. Gleichzeitig sollen die charakteristischen physikalischen und chemischen Eigenschaften der zu modifizierenden Kunststoffe nicht oder möglichst wenig beeinträchtigt werden.

Diese Aufgabe wird erfindungsgemäß gelöst durch eine Polysiloxandispersion, die gekennzeichnet ist durch einen Gehalt an
(a) 25 bis 99,9 Gew.-% einer äußeren Phase aus bei Temperaturen von 20 bis 100°C flüssigen monomeren oder polymeren Polyolen, linearen oder verzweigten Polyglykolethern, aliphatischen Polylactonen und/oder Polycarbonaten,
(b) 0,1 bis 75 Gew.-% einer dispersen Phase aus ein oder mehreren dreidimensional vernetzbaren Polyorganosiloxanen, wobei die vernetzten Polyorganosiloxan-Teilchen einen mittleren Durchmesser von 0,02 bis 50 µm aufweisen, und
(c) 0 bis 20 Gew.-% an Hilfsstoffen, insbesondere Lösungsmitteln, Weichmachern, Vernetzungsmitteln, Katalysatoren, Stabilisatoren, Dispergiermitteln, Härtungsmitteln, Reaktionsvermittlern und/oder Mitteln zur Beeinflussung der Viskosität der äußeren Phase.

Es wurde überraschend festgestellt, daß die erfindungsgemäß vorgeschlagene, spezifisch zusammengesetzte Polysiloxandispersion als Vorprodukt sehr vielseitig einsetzbar ist, weil sie eine ausgezeichnete Verträglichkeit mit zahlreichen Kunststofftypen besitzt und diesen die vorteilhaften Eigenschaften der Silikone verleiht, ohne daß dabei die diesen Kunststoffen selbst innewohnenden erwünschten physikalischen und chemischen Eigenschaften wesentlich beeinträchtigt werden. So lassen sich mit der erfindungsgemäßen Polysiloxandispersion silikonmodifizierte thermoplastische, duroplastische oder elastomere Kunststoffe mit für die Praxis wertvollen Eigenschaftskombinationen und mit sehr guter Verarbeitbarkeit herstellen, wie nachfolgend im einzelnen dargelegt wird.

Als monomere Polyole können für den erfindungsgemäßen Zweck eine Vielzahl bekannter Verbindungen eingesetzt werden. Wegen der leichten Verfügbarkeit und der Vorteile, insbesondere der ausgezeichneten Verträglichkeit und guten Verarbeitbarkeit der resultierenden Produkte, werden für die äußere Phase der erfindungsgemäßen Dispersion als Polyole lineare oder verzweigte aliphatische Glykole bevorzugt eingesetzt, wobei die äußere Phase der Polysiloxandispersion besonders bevorzugt Ethylenglykol, 1,2- oder 1,3-Propandiol, 1,2- oder 1,4-Butandiol, 1,6-Hexandiol, 2,2,4-Trimethylpentandiol-1,3 und/oder Neopentylglykol aufweist.

Weiterhin werden als aliphatische Polyole vorzugsweise Glycerin, Trimethylolpropan sowie Zuckeralkohole, besonders Erythrit, Xylit, Mannit und/oder Sorbit, eingesetzt. Ferner kann die äußere Phase als bevorzugte Polyole ein oder mehrere alicyclische Polyole, insbesondere 1,4-Cyclohexandimethanol, und/oder Saccharose aufweisen.

Als polymere Polyole kommen für die äußere Phase vorzugsweise solche mit einem mittleren Molekulargewicht von 200 bis 20 000 in Frage, wobei das polymere Polyol vorzugsweise ein solches auf der Basis von (Meth-)Acrylsäurealkylenglykolestern ist. Die äußere Phase der erfindungsgemäßen Dispersion kann ferner vorzugsweise polymere Polyole aufweisen, die durch Verseifung oder partielle Verseifung von vinylesterhaltigen Polymeren erhalten werden.

Als Polyether kommen für die äußere Phase vor allem die durch ringöffnende Polymerisation cyclischer Ether in Anwesenheit von Polyolen, z.B. den vorstehend genannten Polyolen, erhältlichen linearen oder verzweigten Polyglykolether in Betracht, von denen wegen ihrer relativ leichten Verfügbarkeit Polyethylenglykol, Polypropylenglykol und/oder Polytetramethylenglykol oder deren Copolymere bevorzugt sind.

Weiter zu verwenden sind aliphatische Polylactone, bevorzugt ε-Polycaprolacton, und/oder Polycarbonate, die z.B. durch Polykondensation von Diolen mit Phosgen zugänglich sind. Vorzugsweise werden für die äußere Phase Polykohlensäureester des Bisphenols A mit einem mittleren Molekulargewicht von 500 bis 100 000 eingesetzt.

Es können für den erfindungsgemäßen Zweck auch Mischungen der vorgenannten Stoffklassen für die äußere Phase der erfindungsgemäßen Polysiloxandispersion eingesetzt werden. Die Verwendung solcher Mischungen kann z.B. im Hinblick auf eine Verringerung der Glas- bzw. Schmelztemperatur der resultierenden Produkte von Vorteil sein.

Zum Zwecke der Beeinflussung der Viskosität der äußeren Phase, insbesondere der Viskositätserniedrigung oder der Verflüssigung, können den erfindungsgemäß für die äußere Phase vorgesehenen Substanzen bzw. deren Mischungen gegebenenfalls noch geeignete Hilfsstoffe, insbesondere Lösungsmittel, Weichmacher, Verdünner u.dgl., zugesetzt werden.

Die disperse Phase der erfindungsgemäßen Polysiloxandispersion wird aus ein oder mehreren dreidimensional vernetzbaren Polyorganosiloxanen gebildet, wobei die in der äußeren Phase dispergierten Polyorganosiloxan-Teilchen nach der Vernetzung einen mittleren Durchmesser im Bereich von 0,02 bis 50 µm, vorzugsweise von 0,05 bis 10 µm, besonders bevorzugt von 0,07 bis 5 µm und ganz besonders bevorzugt von 0,07 bis 1 µm aufweisen. Diese Polyorganosiloxan-Teilchen besitzen an ihrer Oberfläche reaktive Gruppen, über die sie an die Komponenten der äußeren Phase chemisch gebunden werden können.

Unter der Vielzahl von verschiedenen dreidimensional vernetzbaren Polyorganosiloxanen werden solche bevorzugt angewendet, die sich von Siloxaneinheiten der allgemeinen Formel

-(R₂SiO)- (1)

ableiten, in der die beiden einwertigen Reste R, die gleich oder verschieden sein können, lineare oder verzweigte Alkylgruppen mit 1 bis 18 C-Atomen, cycloaliphatische Gruppen mit 4 bis 8 C-Atomen, lineare oder verzweigte Alkenylgruppen mit 2 bis 4 C-Atomen, Phenyl- oder Alkylphenylgruppen mit 1 bis 12 C-Atomen im aliphatischen Rest, wobei die Kohlenwasserstoffreste auch durch Halogene oder Hydroxyl-, Carboxyl-, Carbonsäureanhydrid-, Amino-, Epoxy-, Alkoxy- oder Alkenyloxygruppen substituiert sein können, Polyether- oder Polyolefingruppen sowie Wasserstoff darstellen, wobei die Grupden direkt oder über ein Sauerstoff- oder Stickstoffatom mit einem Siliciumatom der Polysiloxankette verbunden sind.

Beispiele für solche Reste R sind Methyl-, Ethyl-, Isopropyl-, Isobutyl-, Dodecyl- und Octadecylgruppen, Cyclopentyl-, Cyclohexyl- und Cyclooctylgruppen, Vinyl-, Allyl-, Isopropenyl- und 3-Butenylgruppen, Ethylphenyl-, Dodecylgruppen, ferner Gruppen mit Kohlenwasserstoffresten, die z.T. substituiert sind, beispielsweise durch Halogene, insbesondere Fluor oder Chlor, wie z.B. beim Chlorpropyl- oder beim 1,1,1-Trifluorpropylrest. Zumindest ein Teil der Reste R kann auch aus polymeren Gruppen bestehen, wobei hier insbesondere Polyether, wie Polyethylen-, Polypropylen-, Polybutylen- oder Polyhexamethylenglykol oder Polytetrahydrofuran sowie Mischpolymere aus diesen Ethern, ferner Polyolefine, z.B. Polybutadien, Polyisopren, Polybuten, Polyisobuten u.dgl., in Frage kommen. Schließlich kann ein Teil der Reste R auch Wasserstoff sein. Es ist auch möglich, Mischungen der vorgenannten Polyorganoslloxane zu verwenden.

Ferner ist es auch ohne weiteres möglich, erfindungsgemäß solche Polyorganosiloxane einzusetzen, bei denen verschiedene Reste R im Polymermolekül vorhanden sind. Diese verschiedenen Reste können auch entlang der Siloxanhauptkette statistisch verteilt sein. In einer bevorzugten Ausführungsform ist das erfindungsgemäß eingesetzte Polyorganosiloxan ein Blockcopolymeres, bei dem einwertige Reste R' und R'' entlang der Siloxanhauptkette in Blöcken angeordnet sind, die sich von Polymereinheiten der allgemeinen Formel

-(R'₂SiO)ₓ-(R''₂SiO)_{y}- (2)

ableiten, wobei die Reste R' und R'', die die gleiche Bedeutung wie R haben, voneinander verschieden sind, während die Reste R' und R'' unter sich gleich oder verschieden sein können, und x und y gleich 1 oder ganzzahlige Vielfache davon sind.

Wegen der leichten Verfügbarkeit bei gleichzeitig guter Wirkung sind solche Polyorganosiloxane bevorzugt, bei denen mindestens 50% der Reste R, R' bzw. R'' Methyl- und/oder Phenylgruppen darstellen.

Die Erfindung betrifft ferner ein Verfahren zur Herstellung von Polysiloxandispersionen gemäß den Ansprüchen 1 bis 11, das dadurch gekennzeichnet ist, daß
(a) eine Emulsion aus 0,1 bis 75 Gew.-% eines oder mehrerer dreidimensional vernetzbarer, flüssiger Polyorganosiloxane als disperser Phase in 25 bis 99,9 Gew.-% einer äußeren Phase aus bei Temperaturen von 20 bis 100°C flüssigen monomeren oder polymeren Polyolen, linearen oder verzweigten Polyglykolethern, aliphatischen Polylactonen und/oder Polycarbonaten und mit 0 bis 20 Gew.-% von an sich bekannten Hilfsstoffen, insbesondere Lösungsmitteln, Weichmachern, Vernetzungsmitteln, Katalysatoren, Stabilisatoren, Dispergiermitteln, Härtungsmitteln, Reaktionsvermittlern und/oder Mitteln zur Beeinflussung der Viskosität der äußeren Phase hergestellt wird, in der die Polyorganosiloxantröpfchen mit einem mittleren Durchmesser im Bereich von 0,02 bis 50 µm vorliegen, und
(b) eine Vernetzung in den Polyorganosiloxantröpfchen in an sich bekannter Weise unter Bildung fester Teilchen durchgeführt wird.

Vorzugsweise werden in der Verfahrensstufe (a) 2 bis 50 Gew.-% eines oder mehrerer dreidimensional vernetzbarer flüssiger Polyorganosiloxane eingesetzt.

Das mittlere Molekulargewicht der im erfindungsgemäßen Verfahren verwendbaren flüssigen vernetzbaren Polyorganosiloxane kann in weiten Grenzen variieren und liegt im allgemeinen im Bereich von 800 bis 500 000. Die untere Grenze wird dadurch bestimmt, daß mit abnehmendem Molekulargewicht die Vernetzungsdichte der Polyorganosiloxane größer wird und dadurch dessen Elastizität abnimmt. Dieser Effekt kann allerdings durch Zusatz bifunktioneller Vernetzungsmittel in gewissen Grenzen abgeschwächt werden. Die obere Grenze ist durch die mit steigendem Molekulargewicht zunehmende Viskosität der Polyorganosiloxane gegeben, die die erwünschte feine Verteilung in der flüssigen äußeren Phase erschwert. Deshalb werden in Stufe (a) vorzugsweise solche vernetzbaren Polyorganosiloxane oder Polyorganosiloxangemische eingesetzt, die ein mittleres Molekulargewicht von 1 000 bis 100 000 , besonders bevorzugt von 1 200 bis 30 000, aufweisen.

In der erfindungsgemäßen Dispersion können die Teilchengrößen der vernetzten Polyorganosiloxane je nach dem mit der Modifizierung angestrebten Eigenschaftsprofil in weiten Grenzen variieren. Da mit zunehmender mittlerer Teilchengröße die Effektivität der Polyorganosiloxan-Modifizierung immer geringer wird, ist aus wirtschaftlichen Erwägungen heraus ein mittlerer Teilchendurchmesser von maximal 50 µm zweckmäßig. Andererseits werden sowohl die Verarbeitbarkeit als auch die Langzeitstabilität der erfindungsgemäßen Dispersionen mit abnehmender Teilchengröße ungünstiger, so daß es sich nicht als sinnvoll erwiesen hat, den mittleren Teilchendurchmesser auf kleiner als 0,02 µm einzustellen. Dementsprechend werden durch das erfindungsgemäße Verfahren die eingesetzten vernetzbaren flüssigen Polyorganosiloxane in der äußeren Phase so fein verteilt, daß die gebildeten Polysiloxan-Teilchen einen mittleren Durchmesser im Bereich von 0,02 bis 50 µm, vorzugsweise im Bereich von 0,05 bis 10 µm, besonders bevorzugten Bereich von 0,07 bis 5 µm und ganz besonders bevorzugt im Bereich von 0,07 bis 1 µm besitzen.

Die Teilchengrößenverteilung ist in der Regel nicht kritisch und kann z.B. den bevorzugten oder besonders bevorzugten Bereich vollständig oder nur zu einem Teil umfassen. In vielen Fällen kann es jedoch zur Einstellung bestimmter Eigenschaften sinnvoll sein, eine mehr oder weniger enge Teilchengrößenverteilung zu wählen. Zur Erzielung spezieller Effekte kann auch eine bi- oder trimodale Verteilung angewandt werden.

Die Konzentration der vernetzbaren Polyorganosiloxane in der erfindungsgemäßen Dispersion hängt weitgehend von der Art des mit der Modifizierung beabsichtigten Effektes und von der Teilchengröße der Polyorganosiloxane ab. So können u.U. bereits relativ geringe Mengen der vernetzbaren Polysiloxane bis herab zu 0,1 Gew.-% in den erfindungsgemäßen Dispersionen ausreichend sein, während die obere Grenze durch die Stabilität der Dispersion und die maximale Raumerfüllung der äußeren Phase gegeben ist und, je nach Dichte, bei maximal 75 Gew.-% liegt.

Das erfindungsgemäße Verfahren kann in verschiedenen Ausführungsformen durchgeführt werden. Eine bevorzugte Ausführungsform besteht darin, daß die flüssigen vernetzbaren Polyorganosiloxane zunächst in einem ersten flüssigen Medium dispergiert werden, das mit der eigentlichen äußeren Phase mischbar ist, und daß anschließend die erhaltene Dispersion zu der eigentlichen äußeren Phase zugegeben und mit ihr vermischt wird, wobei die Vernetzung der Polyorganosiloxane vor, während oder nach dem Mischen mit der eigentlichen äußeren Phase in geeigneter Weise durchgeführt und gegebenenfalls das erste Dispergiermedium nach Beendigung des Vermischens ganz oder teilweise entfernt wird.

Als erstes Dispergiermedium kommen hierbei nur solche Flüssigkeiten in Frage, deren Anwesenheit im Endprodukt erwünscht oder zumindest nicht störend ist, wie z.B. relativ niedrig siedende Lösungsmittel, Relativverdünner oder Weichmacher, vorzugsweise aber Wasser.

In einer anderen, ebenfalls bevorzugten Ausführungsform des erfindungsgemäßen Verfahrens werden die vernetzbaren flüssigen Polyorganosiloxane zunächst in einem ersten flüssigen Medium dispergiert, das mit der eigentlichen äußeren Phase nicht mischbar ist, worauf die erhaltene Dispersion mit der eigentlichen äußeren Phase gemischt und anschließend das erste Dispergiermedium in geeigneter Weise ganz oder teilweise entfernt wird, wobei die Vernetzung der Polyorganosiloxane vor, während oder nach dem Mischen mit der eigentlichen äußeren Phase bzw. dem Abtrennen des ersten Mediums durchgeführt wird.

Als erstes Dispergiermedium kommen bei dieser Ausführungsform des Verfahrens solche Flüssigkeiten in Frage, die sich nach dem Mischen mit den erfindungsgemäß zu modifizierenden Substanzen bzw. deren Mischungen ohne Beeinträchtigung des erwünschten Eigenschaftsbildes in geeigneter Weise wieder entfernen lassen, z.B. durch Abdestillieren. Geeignet hierfür sind niedrigsiedende Lösungsmittel und vorzugsweise Wasser.

Die Verteilung der flüssigen Polyorganosiloxane in der äußeren Phase kann mit für die Herstellung von Emulsionen an sich bekannten Maßnahmen und Hilfsmitteln bewirkt werden, beispielsweise dadurch, daß man eine der beiden Phasen gegebenenfalls gemeinsam mit einem geeigneten Stabilisator vorlegt und die andere Phase zuführt. Die Emulgierung erfolgt mit Hilfe mechanischer Aggregate, die eine hinreichend hohe Scherwirkung in dem zu dispergierenden Medium entfalten, wie z.B. Rührern, Mischern, Knetern, Dissolvern, Hochdruck- oder Ultraschallhomogenisatoren u.dgl. Es ist auch möglich, zuerst eine grobe Voremulsion der Polyorganosiloxane herzustellen, die dann anschließend in einem Homogenisier- oder Feinemulgierschritt mit z.B. einer der vorgenannten Aggregate zu einer Emulsion mit der gewünschten Tröpfchengrößenverteilung weiterverarbeitet wird.

Falls die zu emulgierenden Polyorganosiloxane keine selbstemulgierenden Eigenschaften aufweisen, ist es erforderlich, bestimmte dispergierend wirkende Mittel zuzusetzen. Eine Selbstemulgierung findet in der Regel nicht statt, wenn die Organogruppen der Polyorganosiloxane Methyl-, Ethyl-, Vinyl- oder Phenylgruppen sind. Dagegen kann mit einer Selbstemulgierung gerechnet werden, wenn zumindest in einem Teil der erfindungsgemäß eingesetzten Polyorganosiloxane die Organogruppen längerkettige Polyether-, Polyester- oder aliphatische Kohlenwasserstoffreste sind.

Als Stabilisatoren können die für die Herstellung von Silikon-Emulsionen an sich bekannten anionischen, kationischen oder nichtionogenen Emulgatoren und Tenside verwendet werden. Ihre Auswahl richtet sich naturgemäß nach der äußeren Phase, in der die Polyorganosiloxane emulgiert werden sollen und kann vom Fachmann nach einigen orientierenden Vorversuchen getroffen werden. Zur Erzielung besonders stabiler Emulsionen können auch Kombinationen verschiedener Stabilisatoren verwendet werden.

Wie bereits oben erwähnt, übt die durchschnittliche Teilchengröße bzw. die Teilchengrößenverteilung der Polyorganosiloxan-Teilchen einen deutlichen Einfluß auf die Effektivität der Polyorganosiloxan-Modifizierung und Verarbeitbarkeit und Langzeitstabilität der erfindungsgemäß hergestellten Dispersionen aus. Es ist daher wichtig, daß Teilchengröße und Teilchengrößenverteilung in den erfindungsgemäßen Dispersionen in der gewünschten und erforderlichen Weise gesteuert werden können. Dies kann in an sich bekannter Weise z.B. durch Auswahl und Konzentration des bzw. der Stabilisatoren erfolgen. Um die gewünschten feinteiligen Emulsionen zu erhalten, wird man besonders wirksame Emulgatoren in höherer Konzentration, z.B. in einer Menge von 20 bis 100 Gew.-%, bezogen auf die Menge des Polyorganosiloxans, einsetzen. Eine weitere Möglichkeit zur Steuerung der Teilchengröße bzw. der Teilchengrößenverteilung besteht darin, daß man die beim Emulgiervorgang aufgewendete mechanische Energie variiert, da bekanntlich die mittlere Teilchengröße mit zunehmender Emulgierenergie abnimmt. Die für den erfindungsgemäßen Zweck vorteilhaften Teilchengrößen bzw. Teilchengrößenverteilungen der Polyorganosiloxan-Teilchen lassen sich daher durch gezielte Variation der Emulgierbedingungen und/oder der Auswahl und Konzentration der Stabilisatoren einstellen. Will man für spezifische Effekte eine di-, tri- oder multimodale Teilchengrößenverteilung haben, so kann diese beispielsweise durch Mischen verschiedener unimodal verteilter Emulsionen oder ,Suspensionen eingestellt werden.

Die Temperatur, bei der die Emulgierung stattfindet, ist unkritisch und wird sich in der Regel nach der Viskosität der verwendeten Substanzen bzw. deren Mischungen in der äußeren Phase richten. Falls möglich, wird man aus Gründen der Energieeinsparung bei Raumtemperatur oder wenig darüber den Emulgiervorgang durchführen, es kann aber auch sein, daß bei hohen Viskositäten der verwendeten äußeren Phase das Emulgieren bei höheren Temperaturen, z.B. bis zu 150°C, durchgeführt werden muß.

Nachdem der Emulgiervorgang durchgeführt worden ist, erfolgt in Verfahrensstufe (b) des erfindungsgemäßen Verfahrens die Vernetzung in den Polyorganosiloxan-Tröpfchen in an sich bekannter Weise unter Bildung fester Teilchen.

In welcher Weise bzw. nach welchem Mechanismus die flüssigen Polyorganosiloxane vernetzt werden, ist unkritisch, solange gewährleistet ist, daß durch die Vernetzungsreaktion die feine Verteilung der Polysiloxanteilchen nicht wesentlich gestört wird und daß in der äußeren Phase keine oder nur unwesentliche Vernetzungsreaktionen stattfinden. Unter dieser Voraussetzung stehen dem Fachmann eine große Zahl unterschiedlicher Möglichkeiten zur Vernetzung von Polyorganosiloxanen zur Verfügung, wie sie z.B. in der bereits zitierten Monographie "Chemie und Technologie der Silikone" zu finden sind.

In einer bevorzugten Ausführungsform des erfindungsgemäßen Verfahrens werden die flüssigen vernetzbaren Polyorganosiloxane zunächst mit Vernetzungsmitteln und/oder Katalysatoren versetzt und erst dann in der äußeren Phase emulgiert, wobei die Bedingungen so gewählt werden, daß der Übergang der Polysiloxan-Teilchen vom flüssigen in den festen Zustand erst nach Beendigung des Emulgiervorganges erfolgt.

In einer anderen, ebenfalls bevorzugten Ausführungsform des erfindungsgemäßen Verfahrens werden erst nach Bildung der Polyorganosiloxan-Emulsion geeignete Vernetzungsmittel und/oder Katalysatoren zugesetzt, durch die die Vernetzung der flüssigen Polyorganosiloxan-Teilchen bewirkt wird.

Die Vernetzung der Polysiloxan-Tröpfchen zu festen Teilchen kann insbesondere durch an sich bekannte Additions- und Kondensationsverfahren erfolgen. Werden als vernetzbare flüssige Polyorganosiloxane solche verwendet, die nach dem Additionsmechanismus vernetzen, dann werden als Vernetzer in der Regel Polyorganohydrogensiloxane, die eine ausreichende Anzahl von Si-H-Bindungen enthalten, z.B. Polymethylhydrogensiloxan, und als Katalysatoren Edelmetalle der VIII. Nebengruppe des Periodischen Systems der Elemente bzw. deren Verbindungen zugesetzt. Die Additionsvernetzung findet meist bei erhöhten Temperaturen, z.B. zwischen 60 und 140°C, in Gegenwart eines Edelmetallkatalysators statt.

Werden als vernetzbare flüssige Polyorganosiloxane solche verwendet, die nach dem Kondensationsmechanismus vernetzen, so können als Vernetzer z.B. Silane mit hydrolysierbaren SiO- oder SiN-Bindungen eingesetzt werden. Solche Vernetzer sind z.B. Methyltriacetoxysilan, Methyltrimethoxysilan, Tetraethoxysilan, Methyl-tris(butanonoximino)silan, Methyltris(cyclohexylamino)silan u.dgl. Es können aber auch als Vernetzer hydrolysierbare Gruppen enthaltende Verbindungen anderer Elemente, z.B. Tetrabutyltitanat, oder Si-H-Bindungen enthaltende Polyorganohydrogensiloxane eingesetzt werden. Als Katalysatoren können, falls erforderlich, die für kondensationsvernetzende Polyorganosiloxane bekannten Schwermetallverbindungen, z.B. Zinn(II)octoat oder Dibutylzinndilaurat, verwendet werden.

Der Zeitpunkt, zu dem die Vernetzung der flüssigen Polyorganosiloxan-Tröpfchen stattfindet, ist unkritisch und kann so gesteuert werden, daß die Vernetzung zu dem gewünschten Zeitpunkt eintritt, beispielsweise unmittelbar nach dem Emulgieren oder aber auch längere Zeit danach, z.B. einige Monate später. Dies gilt auch für die oben erwähnten bevorzugten Ausführungsformen des erfindungsgemäßen Verfahrens.

Wie bereits erwähnt, wird die Vernetzung der flüssigen vernetzbaren Polyorganosiloxane in der Regel durch Zugabe von Vernetzern und/oder Katalysatoren bewirkt. Werden die Vernetzer und/oder Katalysatoren bereits vor dem Emulgieren zugesetzt, muß deren Auswahl natürlich so erfolgen, daß die Vernetzungsreaktion nicht schon unter den während des Emulgierens herrschenden Bedingungen erfolgt, was möglicherweise den Emulsionsprozeß behindern würde, sondern im wesentlichen erst nach Beendigung des Emulgierens, d.h. zu einem späteren, vorbestimmten Zeitpunkt, stattfindet.

Die Vernetzungszeit, d.h. die Zeit, innerhalb der die Polysiloxan-Teilchen praktisch vollständig vernetzen, kann durch dem Fachmann an sich bekannte Maßnahmen eingestellt werden. So kann die Vernetzungszeit bei Kondensationsvernetzungen z.B. durch die Auswahl und Konzentration des Katalysators, bei Additionsvernetzungen z.B. durch Zugabe eines temporär wirkenden Inhibitors, beispielsweise eines kurzkettigen Alkinols, festgelegt werden. Durch geeignete Auswahl des Vernetzers und/oder Katalysators kann die Vernetzungszeit bei Raumtemperatur sehr groß sein, z.B. einige Tage oder Wochen betragen. In solchen Fällen besteht die Möglichkeit, die flüssigen vernetzbaren Polyorganosiloxane bereits einige Zeit vor dem Emulgieren mit den Vernetzern und/oder Katalysatoren zu vermischen. Die Vernetzung wird dann zu dem gewünschten Zeitpunkt durch eine Temperaturerhöhung während oder nach dem Emulgieren ausgelöst.

Die erfindungsgemäßen Polysiloxandispersionen sind zur Herstellung von silikonmodifizierten Polyurethanen, Polyharnstoffen, und Polycarbonaten sehr gut geeignet. Sie verleihen diesen Polymeren ausgezeichnete physikalische und chemische Eigenschaften, insbesondere eine deutlich verbesserte thermische Stabilität, eine sehr niedrige Glastemperatur (bis -100°C), eine hohe Abriebfestigkeit, eine sehr gute Witterungsbeständigkeit, sehr niedrige Oberflächenspannung sowie gute elektrische Eigenschaften. Darüberhinaus werden die Dämpfungseigenschaften der modifizierten Polymeren wesentlich verbessert. Dementsprechend lassen sich die erfindungsgemäßen Polysiloxandispersionen als Vorprodukte vorteilhaft zur Herstellung von silikonmodifizierten thermoplastischen, duroplastischen oder elastomeren Kunststoffen auf der Basis von Polyurethanen, Polyharnstoffen, und Polycarbonaten verwenden, beispielsweise zu Formartikeln, Folien, Beschichtungen, Vergußmassen u.dgl. Auch die Verarbeitungseigenschaften der erhaltenen Polymeren werden in vielen Fällen deutlich verbessert.

Die Erfindung wird anhand der nachstehenden Beispiele weiter erläutert, ohne daß ihr Umfang dadurch in irgendeiner Weise eingeschränkt werden soll. Alle angegebenen Teile und Prozentangaben sind auf das Gewicht bezogen, wenn nichts anderes angegeben ist.

### Beispiel 1

100 Teile eines handelsüblichen Polypropylenglykols mit einem Molekulargewicht von ca. 2000 wurden bei Raumtemperatur mit 5 Teilen eines Stabilisators vermischt, der auf bekannte Weise durch Hydrosilylierung aus 70 % eines Trimethylsilyl-endgestoppten Co-Äquilibrates aus cyclischen Dimethyl- und Methylhydrogensiloxanen und 30% eines mit Allylalkohol als Startmolekül hergestellten Polypropylenglykolethers erhalten wurde.

Zu dieser Mischung wurden unter Rühren mit einer Drehzahl von 500 min⁻¹ innerhalb von 1 Std. 20 Teile eines Gemisches aus
80% eines Hydroxyl-endgestoppten Polydimethylsiloxans mit einer Viskosität von 2000 mPa.s und
20% eines Trimethylsilyl-endgestoppten Polymethylphenylsiloxans mit einer Viskosität von 800 mPa.s
zulaufen gelassen. Es bildete sich eine weiße Emulsion von Polyorganosiloxanen in Polyether, die mit 1 Teil Methyltris(butanonoximino)silan und 0,01 Teilen Dibutylzinndilaurat versetzt und die Gesamtmischung erneut 5 Min. lang gerührt wurde. Die Untersuchung in einem Lichtmikroskop ergab, daß die erhaltene Dispersion vernetzte Polyorganosiloxan-Teilchen mit einem Durchmesser von 0,5 bis 3 µm enthielt.

### Beispiel 2

100 Teile Ethanol wurden mit 10 Teilen eines Stabilisators gemischt, der in analoger Weise wie in Beispiel 1 zusammengesetzt war mit dem Unterschied, daß anstelle des Polypropylenglykolethers ein Polyethylenglykolether verwendet wurde. Zu der erhaltenen, auf 50°C erwärmten Mischung wurden unter Rühren 60 Teile eines Dimethylvinyl-endgestoppten Polydimethylsiloxans mit einer Viskosität von 5000 mPa.s hinzugefügt. Anschließend wurde die erhaltene Mischung 5 Min. mit einem Ultra-Turrax-Homogenisiergerät behandelt. Die erhaltene weiße Emulsion wurde mit 1 Teil eines Polymethylhydrogensiloxans mit einer Viskosität von 60 mPa.s und 0,6 Teilen einer 1%igen Lösung von Hexachlorplatinsäure in Ethanol versetzt und weitere 5 Min. gerührt. Nach etwa 2 Std. waren die Polydimethylsiloxan-Teilchen vernetzt. Die erhaltene Suspension wurde anschließend mit 1000 Teilen 1,2-Propylenglykol vermischt.

### Beispiel 3

Eine Mischung von 50 Teilen Neopentylglykol, 25 Teilen Trimethylolpropan und 25 Teilen eines Polytetramethylenglykolethers (Molekulargewicht 1000) wurde mit 25 Teilen des Stabilisators aus Beispiel 1 versetzt und unter Rühren auf 70°C erwärmt. Anschließend wurden 50 Teile einer Mischung aus
90% Hydroxyl-endgestopptem Polydimethylsiloxan mit einer Viskosität von 4000 mPa.s und
10% γ-Aminopropyltriethoxysilan
zu der vorherigen Mischung zugefügt und die Gesamtmischung mit einem Ultra-Turrax-Homogenisiergerät 5 Min. lang behandelt. Die so erhaltene Emulsion wurde mit 1 Teil Tetraethoxysilan versetzt und diese Mischung 1 Std. lang gerührt. 10 Teile der so erhaltenen Suspension wurden mit 60 Teilen Polypropylenglykol (Molekulargewicht 2000) und 20 Teilen 4,4′-Diphenylmethandiisocyanat vermischt, worauf eine exotherme Reaktion stattfand und das Gemisch zu einem Polyurethanelastomer aushärtete.

Eine Bruchfläche des erhaltenen Elastomeren wurde nach Bedampfen mit Gold im Rasterelektronenmikroskop untersucht und eine Teilchengrößenverteilung der vernetzten Polydimethylsiloxan-Teilchen festgestellt, die zwischen 0,07 und 0,5 µm lag. Die Oberfläche des Polyurethanelastomeren war erheblich glatter als die eines gleichartigen Polyurethans ohne Zusatz von vernetztem Polydimethylsiloxan.

### Beispiel 4

100 Teile entmineralisiertes Wasser wurden mit 10 Teilen eines Alkylpolyethylenglykolethers mit 12 EO-Gruppen und einem C₁₂- bis C₁₈-Alkylrest im Molekül vermischt. Zu dieser Mischung wurden unter Rühren 60 Teile einer Mischung aus
96% Hydroxyl-endgestopptem Polydimethylsiloxan mit einer Viskosität von 2000 mPa.s,
3,9% Methyltriethoxysilan und
0,1% Dibutylzinndilaurat
in einem Zeitraum von 20 Min. zugefügt. Die resultierende Mischung wurde 5 Min. mit einem Ultra-Turrax-Homogenisator behandelt und die dabei erhaltene Emulsion 2 Std. lang auf einer Temperatur von 70°C gehalten.

10 Teile dieser Suspension wurden mit 100 Teilen eines Polyesters aus Adipinsäure und Ethylenglykol mit einem mittleren Molekulargewicht von 2000 und einer OH-Zahl von 55 bei einer Temperatur von 80°C vermischt und das Wasser durch Vakuumdestillation entfernt. In der resultierenden Suspension von Polydimethylsiloxan-Teilchen in dem Polyester wurde die Teilchengrößenverteilung lichtmikroskopisch mit einer Teilchengröße im Bereich von 0,5 bis 1 µm bestimmt.

### Beispiel 5

a) 100 Teile eines handelsüblichen Polypropylenglykols, das mit Trimethylolpropan als Startmolekül hergestellt worden war und ein OH-Äquivalentgewicht von 140 aufwies, wurden mit 50 Teilen eines Stabilisators vermischt, der dem in Beispiel 1 aufgeführten entsprach mit dem Unterschied, daß anstelle von Polypropylenglykol ein Gemisch aus 60 Teilen Polypropylenglykol und 40 Teilen Polyethylenglykol verwendet wurden. Zu dieser Mischung wurden anschließend unter Rühren 150 Teile eines Gemisches aus
96% eines Hydroxyl-endgestoppten Polydimethylsiloxans mit einer Viskosität von 2000 mPa.s und
4% Methyltriethoxysilan
zugefügt und mit einem Ultra-Turrax-Homogenisator behandelt. Zu der erhaltenen Emulsion wurden 0,2 Teile Dibutylzinndilaurat zugefügt, worauf sie durch Vernetzen des Polysiloxans eine Dispersion von Polyorganosiloxan-Elastomeren in dem Polypropylenglykol bildete.
b) Durch Vermischen der unter a) erhaltenen Dispersion mit unterschiedlichen Mengen eines Polypropylenglykols (Molekulargewicht 2000) sowie der jeweils stöchiometrischen Menge an Diphenylmethandiisocyanat (MDI) wurden erfindungsgemäß modifizierte Polyurethan(PU)-Elastomere mit unterschiedlichen Gehalten an Polysiloxanen hergestellt und die nachfolgend aufgeführten Eigenschaften gemessen. Zum Vergleich wurden dieselben Messungen auch an einem reinen Polyorganosiloxan-Elastomeren (d.h. 100% Polysiloxangehalt), das die gleiche Zusammensetzung besaß wie unter Beispiel 5 a) angegeben, sowie an einem reinen PU-Elastomeren (d.h. Polysiloxangehalt 0%), das statt des Polysiloxan-Elastomeren ein Polypropylenglykol (Molekulargewicht 4000) enthielt, durchgeführt.
b₁) Messung der Zugfestigkeit mit einer Zugprüfmaschine nach DIN 53504.

Die Ergebnisse sind in der Tabelle 1 enthalten und zeigen, daß durch die erfindungsgemäße Modifizierung eine deutliche Verbesserung der Zugfestigkeit des nicht modifizierten Polyurethans erreicht werden kann, obwohl die Festigkeit des reinen Polysiloxan-Elastomeren weit schlechter ist.

**Tabelle 1**

| Proben-Nr. | Polysiloxan-Gehalt (%) | Reißfestigkeit (MPa) | Reißdehnung (%) |
|---|---|---|---|
| 1 | 0 | 2,4 | 290 |
| 2 | 14 | 3,7 | 330 |
| 3 | 27 | 5,2 | 370 |
| 4 | 38 | 8,7 | 370 |
| 5 | 100 | 0,5 | 230 |

b₂) Bestimmung der mechanischen Dämpfung durch Messung der Spannungsrelaxation nach uniaxialer Zugdeformation.

Eine einfache, aber aussagekräftige Methode zur Ermittlung der mechanischen Dämpfung eines Elastomeren ist die Bestimmung der Spannungsrelaxation bei konstanter Deformation. Die Messungen wurden an den gleichen Proben 1 bis 5 (siehe Beispiel 5, b₁)) in der Weise durchgeführt, daß der nach Anlegen einer uniaxialen Zugdeformation von 100% eingetretene Spannungsabfall 30 Sek. ermittelt wurde. Die Meßergebnisse sind in Tabelle 2 zusammengestellt und zeigen eine wesentliche Erhöhung der Spannungsrelaxation (ausgedrückt in % des Wertes unmittelbar nach Deformation) gegenüber den beiden unmodifizierten Elastomeren (Proben 1 und 5).

**Tabelle 2**

| Proben-Nr. | Polysiloxan-Gehalt (%) | Spannungsrelaxation (%) bez. auf Anfangswert |
|---|---|---|
| 1 | 0 | 5 |
| 2 | 14 | 11 |
| 3 | 27 | 18 |
| 4 | 38 | 25 |
| 5 | 100 | 5 |

b₃) Verbesserung der thermischen Beständigkeit durch Polyorganosiloxan-Modifizierung.

Zur Demonstration der Verbesserung der thermischen Beständigkeit der mit Hilfe der erfindungsgemäßen Polyorganosiloxandispersionen hergestellten modifizierten Polymere wurden die Proben Nr. 1 und 4 insgesamt 3 Wochen bei 150°C gelagert. Nach bestimmten Zeiten wurde als Maß für den thermischen Abbau die Reißdehnung gemessen.
Die Ergebnisse sind in Tabelle 3 zusammengestellt und zeigen, daß der durch die Temperaturbelastung eingetretene Abfall der Reißdehnung und damit des elastomeren Charakters der Probekörper bei dem silikonmodifizierten Polyurethan deutlich geringer ist als beim nicht modifizierten Polyurethan.

**Tabelle 3**

| Temperzeit (Stunden) | Abfall der Reißdehnung in % des Anfangswertes | |
|---|---|---|
| | Probe 1 (0% Silikon) | Probe 4 (38% Silikon) |
| 24 | 72 | 76 |
| 86 | 60 | 66 |
| 170 | 31 | 42 |
| 360 | 17 | 25 |
| 500 | 14 | 20 |

### Beispiel 6

Es wurden durch Vermischen einer polysiloxanmodifizierten Polypropylenglykol-Dispersion, die die gleiche Zusammensetzung wie in Beispiel 5 a) aufwies, mit jeweils stöchiometrischen Mengen an Isophorondiisocyanat Probekörper hergestellt, an denen bei verschiedenen Meßfrequenzen Dielektrizitätskonstanten (DK), Verlustwinkel (tan δ) und spezifische Widerstände gemessen wurden. Die Ergebnisse dieser Messungen sind in Tabelle 4 zusammengefaßt und zeigen die deutliche Verbesserung, d.h. Reduzierung der Dielektrizitätskonstanten und des Verlustwinkels bzw. eine Erhöhung des spezifischen Widerstandes infolge der erfindungsgemäßen Modifizierung mit Polysiloxanen.

**Tabelle 4**

| - Meßfrequenz 10 kHz - | | | | |
|---|---|---|---|---|
| Proben-Nr. | Polysiloxan-Gehalt (%) | DK | tan δ | Spez. Widerst. x 10⁶(Ω.cm) |
| 6 | 0 | 4,7 | 0,122 | 316 |
| 7 | 15 | 4,8 | 0,118 | 313 |
| 8 | 29 | 4,1 | 0,082 | 535 |
| 9 | 40 | 3,7 | 0,062 | 790 |

Die gleichen Messungen wurden auch bei höheren Frequenzen durchgeführt, und zwar bis zu 10 MHz. Dabei wurden die in Tabelle 4 dargestellten Ergebnisse ohne Ausnahme bestätigt.

### Beispiel 7

100 Teile Polytetramethylenglykol (Molekulargewicht 1000),
50 Teile OH-endgestopptes Polydimethylsiloxan mit 10 000 mPa.s,
3 Teile Aminopropylmethyldiethoxysilan,
2 Teile Tetraethoxysilan und
12 Teile des Stabilisators aus Beispiel 1
wurden bei Raumtemperatur miteinander vermischt und mit einem Ultra-Turrax-Homogenisator behandelt. Nach 2-tägigem Stehenlassen erhielt man eine Dispersion von vernetzten Polyorganosiloxan-Teilchen in dem Polytetramethylenglykol.

Unter Verwendung dieser erfindungsgemäßen Polyorganosiloxan-Dispersion wurden Polyurethan-Probekörper wie folgt hergestellt:
6 Teile der Polyorganosiloxan-Dispersion,
3 Teile Diphenylmethandiisocyanat,
91 Teile eines handelsüblichen Polytetramethylenglykol-Prepolymeren mit einem NCO-Gehalt von 7,9%, und
8 Teile 1,4-Butandiol
wurden bei einer Temperatur von 60°C gemischt, etwa 3 Min. gerührt, dann auf 100°C erwärmt, in eine auf 110°C vorgeheizte Form gegossen und bei 110°C 16 Std. lang gehärtet. Es wurde ein äußerst zähes Elastomeres mit einem Gehalt von rund 3% Silikonelastomeren und mit einer Härte nach Shore A von 85 erhalten.

Zu Vergleichszwecken wurde in gleicher Weise ein Polyurethan-Probekörper ohne die erfindungsgemäße Dispersion und ohne Diphenylmethandiisocyanat hergestellt.

Die unter Verwendung der erfindungsgemäßen Dispersion hergestellten Prüfkörper besaßen einen wesentlich glatteren "Griff", d.h. einen geringeren Reibungskoeffizienten. Dies wurde durch Messung des Reibbeiwertes (Messung in Anlehnung an die Lieferspezifikation Nr. 5306 der Firma Daimler Benz) bestätigt, der für den nicht modifizierten Probekörper 0,39 und für einen erfindungsgemäß modifizierten Probekörper 0,30 betrug.

Ferner wurde der Abrieb der Probekörper nach DIN 53516 gemessen. Die Messung ergab bei dem nicht modifizierten Probekörper einen Abrieb von 320 mg und bei dem erfindungsgemäß modifizierten Probekörper einen Abrieb von nur 170 mg. Der mit Hilfe der erfindungsgemäßen Polyorganosiloxandispersion hergestellte Probekörper besaß demnach eine um fast 50% bessere Abriebfestigkeit als der nicht modifizierte Probekörper.

Ferner wurden an beiden Probekörpern Reißfestigkeits- und Reißdehnungsmessungen durchgeführt, die im Rahmen der Meßgenauigkeit zu identischen Werten führten.

Diese Ergebnisse zeigen, daß die Oberflächeneigenschaften der erfindungsgemäß modifizierten Polymeren gegenüber unmodifizierten Polymeren deutlich verbessert sind.

## Patentansprüche (Patentansprüche für folgende(n) Vertragsstaat(en): AT, BE, CH, DE, FR, GB, IT, LI, LU, NL)

1. Polysiloxandispersion, enthaltend
(a) 25 bis 99,9 Gew.-% einer äußeren Phase aus bei Temperaturen von 20 bis 100°C flüssigen monomeren oder polymeren Polyolen, linearen oder verzweigten Polyglykolethern, aliphatischen Polylactonen und/oder Polycarbonaten,
(b) 0,1 bis 75 Gew.-% einer dispersen Phase aus ein oder mehreren dreidimensional vernetzbaren Polyorganosiloxanen, wobei die vernetzten Polyorganosiloxan-Teilchen einen mittleren Durchmesser von 0,02 bis 50 µm aufweisen, und
(c) 0 bis 20 Gew.-% an Hilfsstoffen, insbesondere Lösungsmitteln, Weichmachern, Vernetzungsmitteln, Katalysatoren, Stabilisatoren, Dispergiermitteln, Härtungsmitteln, Reaktionsvermittlern und/oder Mitteln zur Beeinflussung der Viskosität der äußeren Phase.

2. Polysiloxandispersion nach Anspruch 1, dadurch gekennzeichnet, daß die äußere Phase als Polyole lineare oder verzweigte aliphatische Glykole aufweist.

3. Polysiloxandispersion nach Anspruch 2, dadurch gekennzeichnet, daß die äußere Phase als Glykole Ethylenglykol, 1,2- oder 1,3-Propandiol, 1,2- oder 1,4-Butandiol, 1,6-Hexandiol, 2,2,4-Trimethylpentandiol-1,3 und/oder Neopentylglykol aufweist.

4. Polysiloxandispersion nach Anspruch 1, dadurch gekennzeichnet, daß die äußere Phase ein oder mehrere polymere Polyole mit einem mittleren Molekulargewicht von 200 bis 20 000 aufweist.

5. Polysiloxandispersion nach Anspruch 1, dadurch gekennzeichnet, daß die äußere Phase Polyethylenglykol, Polypropylenglykol und/oder Polytetramethylenglykol oder deren Copolymere aufweist.

6. Polysiloxandispersion nach Anspruch 1, dadurch gekennzeichnet, daß die äußere Phase ε-Polycaprolacton aufweist.

7. Polysiloxandispersion nach Anspruch 1, dadurch gekennzeichnet, daß die äußere Phase Polykohlensäureester des Bisphenols A mit einem mittleren Molekulargewicht von 500 bis 100 000 aufweist.

8. Polysiloxandispersion nach den Ansprüchen 1 bis 7, dadurch gekennzeichnet, daß die dreidimensional vernetzbaren Polyorganosiloxane sich von Siloxaneinheiten der allgemeinen Formel
-(R₂SiO)- (1)
ableiten, in der die beiden einwertigen Reste R, die gleich oder verschieden sein können, lineare oder verzweigte Alkylgruppen mit 1 bis 18 C-Atomen, cycloaliphatische Gruppen mit 4 bis 8 C-Atomen, lineare oder verzweigte Alkenylgruppen mit 2 bis 4 C-Atomen, Phenyl- oder Alkylphenylgruppen mit 1 bis 12 C-Atomen im aliphatischen Rest, wobei die Kohlenwasserstoffreste auch durch Halogene oder Hydroxyl-, Carboxyl-, Carbonsäure-anhydrid-, Amino-, Epoxy-, Alkoxy- oder Alkenyloxygruppen substituiert sein können, ferner Polyether- oder Polyolefingruppen sowie Wasserstoff darstellen, wobei die Gruppen direkt oder über ein Sauerstoff- oder Stickstoffatom mit einem Siliciumatom der Polysiloxankette verbunden sind.

9. Polysiloxandispersion nach Anspruch 8, dadurch gekennzeichnet, daß das Polyorganosiloxan ein Blockcopolymeres ist, bei dem einwertige Reste R' und R'' entlang der Siloxanhauptkette in Blöcken angeordnet sind, die sich von Polymereinheiten der allgemeinen Formel
-(R'₂SiO)ₓ-(R''₂SiO)_{y}- (2)
ableiten, wobei die Reste R' und R'', die die gleiche Bedeutung wie R haben, voneinander verschieden sind, während die Reste R' und R'' unter sich gleich oder verschieden sein können, und x und y gleich 1 oder ganzzahlige Vielfache davon sind.

10. Polysiloxandispersion nach den Ansprüchen 8 und 9 , dadurch gekennzeichnet, daß mindestens 50% der Reste R, R' bzw. R'' Methyl- und/oder Phenylgruppen sind.

11. Polysiloxandispersion nach den Ansprüchen 1 bis 10 , dadurch gekennzeichnet, daß die in der äußeren Phase dispergierten Polyorganosiloxan-Teilchen einen mittleren Durchmesser im Bereich von 0,07 bis 1 µm aufweisen.

12. Verfahren zur Herstellung von Polysiloxandispersionen gemäß den Ansprüchen 1 bis 11, dadurch gekennzeichnet, daß
(a) eine Emulsion aus 0,1 bis 75 Gew.-% eines oder mehrerer dreidimensional vernetzbarer, flüssiger Polyorganosiloxane als disperser Phase in 25 bis 99,9 Gew.-% einer äußeren Phase aus bei Temperaturen von 20 bis 100°C flüssigen monomeren oder polymeren Polyolen, linearen oder verzweigten Polyglykolethern, aliphatischen Polylactonen und/oder Polycarbonaten und mit 0 bis 20 Gew.-% an Hilfsstoffen, insbesondere Lösungsmitteln, Weichmachern, Vernetzungsmitteln, Katalysatoren, Stabilisatoren, Dispergiermitteln, Härtungsmitteln, Reaktionsvermittlern und/oder Mitteln zur Beeinflussung der Viskosität der äußeren Phase, hergestellt wird, in der die Polyorganosiloxantröpfchen mit einem mittleren Durchmesser im Bereich von 0,02 bis 50 µm vorliegen, und
(b) eine Vernetzung in den Polyorganosiloxantröpfchen in an sich bekannter Weise unter Bildung fester Teilchen durchgeführt wird.

13. Verfahren nach Anspruch 12, dadurch gekennzeichnet, daß in Verfahrensstufe (a) 2 bis 50 Gew.-% eines oder mehrerer dreidimensional vernetzbarer, flüssiger Polyorganosiloxane eingesetzt werden.

14. Verfahren nach Anspruch 12, dadurch gekennzeichnet, daß das in Stufe (a) eingesetzte vernetzbare Polyorganosiloxan oder Polyorganosiloxangemisch ein mittleres Molekulargewicht von 1 200 bis 30 000 aufweist.

15. Verfahren nach den Ansprüchen 12 bis 14, dadurch gekennzeichnet, daß die flüssigen, vernetzbaren Polyorganosiloxane zunächst in einem ersten flüssigen Medium dispergiert werden, das mit der eigentlichen äußeren Phase mischbar ist, und daß anschließend die erhaltene Dispersion zu der eigentlichen äußeren Phase zugegeben und mit ihr vermischt wird, wobei die Vernetzung der Polyorganosiloxane vor, während oder nach dem Mischen mit der eigentlichen äußeren Phase in geeigneter Weise durchgeführt und gegebenenfalls das erste Dispergiermedium nach Beendigung des Vermischens ganz oder teilweise entfernt wird.

16. Verfahren nach den Ansprüchen 12 bis 14, dadurch gekennzeichnet, daß die flüssigen, vernetzbaren Polyorganosiloxane zunächst in einem ersten flüssigen Medium dispergiert werden, das mit der eigentlichen äußeren Phase nicht mischbar ist, die erhaltene Dispersion dann mit der eigentlichen äußeren Phase gemischt und anschließend das erste Dispergiermedium in geeigneter Weise ganz oder teilweise entfernt wird, wobei die Vernetzung der Polyorganosiloxane vor, während oder nach dem Mischen mit der eigentlichen äußeren Phase bzw. Abtrennen des ersten Mediums durchgeführt wird.

17. Verwendung von Polysiloxandispersionen gemäß den Ansprüchen 1 bis 11 als Vorprodukte zur Herstellung von silikonmodifizierten thermoplastischen, duroplastischen oder elastomeren Kunststoffen auf der Basis von Polyurethanen, Polyharnstoffen, gesättigten Polyestern und Polycarbonaten.

## Patentansprüche (Patentansprüche für folgende(n) Vertragsstaat(en): ES)

1. Verfahren zur Herstellung einer Polysiloxandispersion, dadurch gekennzeichnet, daß
(a) eine Emulsion aus 0,1 bis 75 Gew.-% eines oder mehrerer dreidimensional vernetzbarer, flüssiger Polyorganosiloxane als disperser Phase in 25 bis 99,9 Gew.-% einer äußeren Phase aus bei Temperaturen von 20 bis 100°C flüssigen monomeren oder polymeren Polyolen, linearen oder verzweigten Polyglykolethern, aliphatischen Polylactonen und/oder Polycarbonaten und mit 0 bis 20 Gew.% an Hilfsstoffen, insbesondere Lösungsmitteln, Weichmachern, Vernetzungsmitteln, Katalysatoren, Stabilisatoren, Dispergiermitteln, Härtungsmitteln, Reaktionsvermittlern und/oder Mitteln zur Beeinflussung der Viskosität der äußeren Phase, hergestellt wird, in der die Polyorganosiloxantröpfchen mit einem mittleren Durchmesser im Bereich von 0,02 bis 50 µm vorliegen, und
(b) eine Vernetzung in den Polyorganosiloxantröpfchen in an sich bekannter Weise unter Bildung fester Teilchen durchgeführt wird.

2. Verfahren nach Anspruch 1, dadurch gekennzeichnet, daß in Verfahrensstufe (a) 2 bis 50 Gew.-% eines oder mehrerer dreidimensional vernetzbarer, flüssiger Polyorganosiloxane eingesetzt werden.

3. Verfahren nach Anspruch 1, dadurch gekennzeichnet, daß das in Stufe (a) eingesetzte vernetzbare Polyorganosiloxan oder Polyorganosiloxangemisch ein mittleres Molekulargewicht von 1200 bis 30000 aufweist.

4. Verfahren nach den Ansprüchen 1 bis 3, dadurch gekennzeichnet, daß in der äußeren Phase als Polyole lineare oder verzweigte aliphatische Glykole eingesetzt werden.

5. Verfahren nach Anspruch 4, dadurch gekennzeichnet, daß die äußere Phase als Glykole Ethylenglykol, 1,2- oder 1,3-Propandiol, 1,2- oder 1,4-Butandiol, 1,6-Hexandiol, 2,2,4-Trimethylpentandiol-1,3 und/oder Neopentylglykol aufweist.

6. Verfahren nach den Ansprüchen 1 bis 3, dadurch gekennzeichnet, daß die in der äußeren Phase eingesetzten ein oder mehreren polymeren Polyole ein mittleres Molekulargewicht von 200 bis 20000 aufweisen.

7. Verfahren nach den Ansprüchen 1 bis 3, dadurch gekennzeichnet, daß die äußere Phase Polyethylenglykol, Polypropylenglykol und/oder Polytetramethylenglykol oder deren Copolymere aufweist.

8. Verfahren nach den Ansprüchen 1 bis 3, dadurch gekennzeichnet, daß die äußere Phase ε-Polycaprolacton aufweist.

9. Verfahren nach den Ansprüchen 1 bis 3, dadurch gekennzeichnet, daß die äußere Phase Polykohlensäureester des Bisphenols A mit einem mittleren Molekulargewicht von 500 bis 100000 aufweist.

10. Verfahren nach den Ansprüchen 1 bis 9, dadurch gekennzeichnet, daß die eingesetzten dreidimensional vernetzbaren Polyorganosiloxane sich von Siloxaneinheiten der allgemeinen Formel
-(R₂SiO)- (1)
ableiten, in der die beiden einwertigen Reste R, die gleich oder verschieden sein können, lineare oder verzweigte Alkylgruppen mit 1 bis 18 C-Atomen, cycloaliphatische Gruppen mit 4 bis 8 C-Atomen, lineare oder verzweigte Alkenylgruppen mit 2 bis 4 C-Atomen, Phenyl- oder Alkylphenylgruppen mit 1 bis 12 C-Atomen im aliphatischen Rest, wobei die Kohlenwasserstoffreste auch durch Halogene oder Hydroxyl-, Carboxyl-, Carbonsäureanhydrid-, Amino-, Epoxy-, Alkoxy- oder Alkenyloxygruppen substituiert sein können, ferner Polyether- oder Polyolefingruppen sowie Wasserstoff darstellen, wobei die Gruppen direkt oder über ein Sauerstoff- oder Stickstoffatom mit einem Siliciumatom der Polysiloxankette verbunden sind.

11. Verfahren nach Anspruch 10, dadurch gekennzeichnet, daß das eingesetzte Polyorganosiloxan ein Blockcopolymeres ist, bei dem einwertige Reste R' und R'' entlang der Siloxanhauptkette in Blöcken angeordnet sind, die sich von Polymereinheiten der allgemeinen Formel
-(R'₂SiO)ₓ-(R''₂SiO)_{y}- (2)
ableiten, wobei die Reste R' und R'', die die gleiche Bedeutung wie R haben, voneinander verschieden sind, während die Reste R' und R'' unter sich gleich oder verschieden sein können, und x und y gleich 1 oder ganzzahlige Vielfache davon sind.

12. Verfahren nach den Ansprüchen 10 und 11, dadurch gekennzeichnet, daß mindestens 50% der Reste R, R' bzw. R'' Methyl- und/oder Phenylgruppen sind.

13. Verfahren nach den Ansprüchen 1 bis 12, dadurch gekennzeichnet, daß die in der äußeren Phase dispergierten Polyorganosiloxan-Teilchen einen mittleren Durchmesser im Bereich von 0,07 bis 1 µm aufweisen.

14. Verfahren nach den Ansprüchen 1 bis 13, dadurch gekennzeichnet, daß die flüssigen, vernetzbaren Polyorganosiloxane zunächst in einem ersten flüssigen Medium dispergiert werden, das mit der eigentlichen äußeren Phase mischbar ist, und daß anschließend die erhaltene Dispersion zu der eigentlichen äußeren Phase zugegeben und mit ihr vermischt wird, wobei die Vernetzung der Polyorganosiloxane vor, während oder nach dem Mischen mit der eigentlichen äußeren Phase in geeigneter Weise durchgeführt und gegebenenfalls das erste Dispergiermedium nach Beendigung der Vermischens ganz oder teilweise entfernt wird.

15. Verfahren nach den Ansprüchen 1 bis 13, dadurch gekennzeichnet, daß die flüssigen, vernetzbaren Polyorganosiloxane zunächst in einem ersten flüssigen Medium dispergiert werden, das mit der eigentlichen äußeren Phase nicht mischbar ist, die erhaltene Dispersion dann mit der eigentlichen äußeren Phase gemischt und anschließend das erste Dispergiermedium in geeigneter Weise ganz oder teilweise entfernt wird, wobei die Vernetzung der Polyorganosiloxane vor, während oder nach dem Mischen mit der eigentlichen äußeren Phase bzw. Antrennen des ersten Mediums durchgeführt wird.

16. Verwendung von Polysiloxandispersionen gemäß den Ansprüchen 1 bis 15 als Vorprodukte zur Herstellung von silikonmodifizierten thermoplastischen, duroplastischen oder elastomeren Kunststoffen auf der Basis von Polyurethanen, Polyharnstoffen, gesättigten Polyestern und Polycarbonaten.

## Claims (Claims for the following Contracting State(s): AT, BE, CH, DE, FR, GB, IT, LI, LU, NL)

1. Polysiloxane dispersion containing
(a) 25 to 99.9 % by weight of an outer phase of monomeric or polymeric polyols, linear or branched polyethylene glycol ethers, aliphatic polylactones and/or polycarbonates, which are liquid at temperatures of 20 to 100°C,
(b) 0.1 to 75 % by weight of a disperse phase of one or more polyorganosiloxanes which are cross-linkable three-dimensionally, wherein the cross-linked polyorganosiloxane particles display a mean diameter of 0.02 to 50 µm, and
(c) 0 to 20 % by weight of auxiliary substances, in particular solvents, softeners, cross-linking agents, catalysts, stabilisers, dispersing agents, hardeners, reagents and/or means for influencing the viscosity of the outer phase.

2. Polysiloxane dispersion according to claim 1, characterised thereby, that the outer phase displays linear or branched aliphatic glycols as polyols.

3. Polysiloxane dispersion according to claim 2, characterised thereby, that the outer phase displays ethylene glycol, 1,2- or 1,3-propanediol, 1,2- or 1,4-butanediol, 1,6-hexanediol, 2,2,4-trimethylpentanediol-1,3 and/or neopentylglycol as glycols.

4. Polysiloxane dispersion according to claim 1, characterised thereby, that the outer phase displays one or more polymeric polyols with a mean molecular weight of 200 to 20000.

5. Polysiloxane dispersion according to claim 1, characterised thereby, that the outer phase displays polyethylene glycol, polypropylene glycol and/or polytetramethylene glycol or their copolymers.

6. Polysiloxane dispersion according to claim 1, characterised thereby, that the outer phase displays ε-polycaprolactone.

7. Polysiloxane dispersion according to claim 1, characterised thereby, that the outer phase displays polycarbonic acid ester of the bisphenol A with a mean molecular weight of 500 to 100 000.

8. Polysiloxane dispersion according to claims 1 to 7, characterised thereby, that the three-dimensionally cross-linkable polyorganosiloxanes are derived from siloxane units of the general formula
-(R₂SiO)-, (1)
in which both the monovalent residues R, which can be the same or different, can be linear or branched alkyl groups with 1 to 18 C-atoms, cycloaliphatic groups with 4 to 8 C-atoms, linear or branched alkenyl groups with 2 to 4 C-atoms, phenyl or alkylphenyl groups with 1 to 12 C-atoms in the aliphatic residue, wherein the hydrocarbon residues can also be substituted by halogen or hydroxyl, carboxyl, carboxyl anhydride, amino, epoxy, alkoxy or alkenyloxy groups and can furthermore represent polyether or polyolefin groups as well as hydrogen, wherein the groups are linked with a silicon atom of the polysiloxane chain either directly or by way of an oxygen or nitrogen atom.

9. Polysiloxane dispersion according to claim 8, characterised thereby, that the polyorganosiloxane is a block copolymer, in which monovalent residues R' and R'' are arranged along the main siloxane chain in blocks which derive from polymer units of the general formula
-(R'₂SiO)ₓ-(R''₂SiO)_{y}-, (2)
wherein the residues R' and R'', which have the same significance as R differ one from the other, whilst the residues R' and R'' can be the same or different and x and y can be equal to 1 or integral multiples thereof.

10. Polysiloxane dispersion according to the claims 8 and 9, characterised thereby, that at least 50% of the residues R, R' or R'' are methyl and/or phenyl groups.

11. Polysiloxane dispersion according to the claims 1 to 10, characterised thereby, that the polyorganosiloxane particles dispersed in the outer phase display a mean diameter in the range of 0.07 to 1 µm.

12. Method for the production of polysiloxane dispersions according to the claims 1 to 11, characterised thereby, that
a) an emulsion of 0.1 to 75 % by weight of one or more liquid polyorganosiloxanes which are cross-linkable three-dimensionally is produced as disperse phase in 25 to 99.9 % by weight of an outer phase of monomeric or polymeric polyols, linear or branched polyethylene glycol ethers, aliphatic polylactones and/or polycarbonates, which are liquid at temperatures of 20 to 100°C, and with 0 to 20 % by weight of auxiliary substances, in particular solvents, softeners, cross-linking agents, catalysts, stabilisers, dispersing agents, hardeners, reagents and/or means for influencing the viscosity of the outer phase, in which the polyorganosiloxane droplets are present with a mean diameter in the range of 0.02 to 50 µm, and
b) a cross-linking in the polyorganosiloxane droplets is performed in an in itself known manner with the formation of solid particles.

13. Method according to claim 12, characterised thereby, that 2 to 50 % by weight of one or more liquid polyorganoslloxanes which are cross-linkable three-dimensionally are used in the method step (a).

14. Method according to claim 12, characterised thereby, that the cross-linkable polyorganosiloxane or polyorganosiloxane mixture used in step (a) displays a mean molecular weight of 1200 to 30 000.

15. Method according to the claims 12 to 14, characterised thereby, that the liquid cross-linkable polyorganosiloxanes are initially dispersed in a first liquid medium which is mixable with the actual outer phase and that the obtained dispersion is subsequently added to the actual outer phase and intermixed therewith, wherein the cross-linking of the polyorganosiloxanes is performed in suitable manner before, during or after the mixing with the actual outer phase and the first dispersing agent is in a given case wholly or partially removed after termination of the intermixing.

16. Method according to the claims 12 to 14, characterised thereby, that the liquid cross-linkable polyorganosiloxanes are initially dispersed in a first liquid medium which is not mixable with the actual outer phase, the obtained dispersion is then mixed with the actual outer phase and the first dispersing agent is subsequently wholly or partially removed in suitable manner, wherein the cross-linking of the polyorganosiloxanes is performed before, during or after the mixing with the actual outer phase or separating-out of the first medium.

17. Use of polysiloxane dispersions according to the claims 1 to 11 as intermediate products for the production of silicone-modified thermoplastic, thermosetting or elastomeric synthetic materials on the base of polyurethanes, polyureas, saturated polyesters and polycarbonates.

## Claims (Claims for the following Contracting State(s): ES)

1. Method for the production of a polysiloxane dispersion, characterised thereby, that
a) an emulsion of 0.1 to 75 % by weight of one or more liquid polyorganosiloxanes which are cross-linkable three-dimensionally is produced as disperse phase in 25 to 99.9 % by weight of an outer phase of monomeric or polymeric polyols, linear or branched polyethylene glycol ethers, aliphatic polylactones and/or polycarbonates, which are liquid at temperatures of 20 to 100°C, and with 0 to 20 % by weight of auxiliary substances, in particular solvents, softeners, cross-linking agents, catalysts, stabilisers, dispersing agents, hardeners, reagents and/or means for influencing the viscosity of the outer phase, in which the polyorganosiloxane droplets are present with a mean diameter in the range of 0.02 to 50 µm, and
b) a cross-linking in the polyorganosiloxane droplets is performed in an in itself known manner with the formation of solid particles.

2. Method according to claim 1, characterised thereby, that 2 to 50 % by weight of one or more liquid polyorganosiloxanes which are cross-linkable three-dimensionally are used in the method step (a).

3. Method according to claim 1, characterised thereby, that the cross-linkable polyorganosiloxane or polyorganosiloxane mixture used in step (a) displays a mean molecular weight of 1200 to 30 000.

4. Method according to the claims 1 to 3, characterised thereby, that the outer phase displays linear or branched aliphatic glycols as polyols.

5. Method according to claim 4, characterised thereby, that the outer phase displays ethylene glycol, 1,2- or 1,3-propanediol, 1,2- or 1,4-butanediol, 1,6-hexanediol, 2,2,4-trimethylpentanediol-1,3 and/or neopen-tylglycol as glycols.

6. Method according to the claims 1 to 3, characterised thereby, that the one or more polymeric polyols used in the outer phase have a mean molecular weight of 200 to 20 000.

7. Method according to the claims 1 to 3, characterised thereby, that the outer phase displays polyethylene glycol, polvpropylene glycol and/or polytetramethylene glycol or their copolymers.

8. Method according to the claims 1 to 3, characterised thereby, that the outer phase displays ε-polycaprolactone.

9. Method according to the claims 1 to 3, characterised thereby, that the outer phase displays polycarbonic acid ester of the bisphenol A with a mean molecular weight of 500 to 100 000.

10. Method according to the claims 1 to 9, characterised thereby, that the three-dimensionally cross-linkable polyorganosiloxanes are derived from siloxane units of the general formula
-(R₂SiO)-, (1)
in which both the monovalent residues R, which can be the same or different, can be linear or branched alkyl groups with 1 to 18 C-atoms, cycloaliphatic groups with 4 to 8 C-atoms, linear or branched alkenyl groups with 2 to 4 C-atoms, phenyl or alkylphenyl groups with 1 to 12 C-atoms in the aliphatic residue, wherein the hydrocarbon residues can also be substituted by halogen or hydroxyl, carboxyl, carboxyl anhydride, amino, epoxy, alkoxy or alkenyloxy groups and can furthermore represent polyether or polyolefin groups as well as hydrogen, wherein the groups are linked with a silicon atom of the polysiloxane chain either directly or by way of an oxygen or nitrogen atom.

11. Method according to claim 10, characterised thereby, that the polyorganosiloxane is a block copolymer, in which monovalent residues R' and R'' are arranged along the main siloxane chain in blocks which derive from polymer units of the general formula
-(R'₂SiO)ₓ-(R''₂SiO)_{y}-, (2)
wherein the residues R' and R'', which have the same significance as R differ one from the other, whilst the residues R' and R'' can be the same or different and x and y can be equal to 1 or integral multiples thereof.

12. Method according to the claims 10 and 11, characterised thereby, that at least 50% of the residues R, R' or R'' are methyl and/or phenyl groups.

13. Method according to the claims 1 to 12, characterised thereby, that the polyorganosiloxane particles dispersed in the outer phase display a mean diameter in the range of 0.07 to 1 µm.

14. Method according to the claims 1 to 13, characterised thereby, that the liquid cross-linkable polyorganosiloxanes are initially dispersed in a first liquid medium which is mixable with the actual outer phase and that the obtained dispersion is subsequently added to the actual outer phase and intermixed therewith, wherein the cross-linking of the polyorganosiloxanes is performed in suitable manner before, during or after the mixing with the actual outer phase and the first dispersing agent is in a given case wholly or partially removed after termination of the intermixing.

15. Method according to the claims 1 to 13, characterised thereby, that the liquid cross-linkable polyorganosiloxanes are initially dispersed in a first liquid medium which is not mixable with the actual outer phase, the obtained dispersion is then mixed with the actual outer phase and the first dispersing agent is subsequently wholly or partially removed in suitable manner, wherein the cross-linking of the polyorganosiloxanes is performed before, during or after the mixing with the actual outer phase or separating-out of the first medium.

16. Use of polysiloxane dispersions according to the claims 1 to 15 as intermediate products for the production of silicone-modified thermoplastic, thermosetting or elastomeric synthetic materials on the base of polyurethanes, polyureas, saturated polyesters and polycarbonates.

## Revendications (Revendications pour l'(les) Etat(s) contractant(s) suivant(s): AT, BE, CH, DE, FR, GB, IT, LI, LU, NL)

1. Dispersion de polysiloxane comprenant:
a) 25 à 99,9% en poids d'une phase externe de polyol monomère ou polymère, de polyglycol éther linéaire ou ramifié, de polylactone aliphatique et/ou de polycarbonate, liquides entre 20 et 100°C,
b) 0,1 à 75% en poids d'une phase dispersée constituée d'un ou plusieurs polyorganosiloxanes réticulables en 3 dimensions permettant d'obtenir des particules de polyorganosiloxane réticulé d'un diamètre moyen de 0,02 à 50 µm et
c) 0 à 20% en poids d'un adjuvant, en particulier solvants, émollients, adjuvants de réticulation, dispersants, catalyseurs, stabilisants, durcisseurs, intermédiaires de réaction et/ou modificateurs de la viscosité de la phase externe.

2. Dispersion de polysiloxane selon la revendication 1, caractérisée en ce que la phase externe comprend, en tant que polyols, des glycols aliphatiques linéaires ou ramifiés.

3. Dispersion de polysiloxane selon la revendication 2, caractérisée en ce que la phase externe comprend, en tant que glycol: éthylène glycol, 1,2- ou 1,3-propanediol, 1,2- ou 1,4-butanediol, 1,6-hexanediol, 2,2,4-triméthylpentanediol-1,3 et/ou néopentylglycol.

4. Dispersion de polysiloxane selon la revendication 1, caractérisée en ce que la phase externe comprend un ou plusieurs polyols polymères d'un poids moléculaire moyen compris entre 200 et 20 000.

5. Dispersion de polysiloxane selon la revendication 1, caractérisée en ce que la phase externe comprend: polyéthylène glycol, polypropylène glycol et/ou polytétraméthylène glycol et/ou leurs copolymères.

6. Dispersion de polysiloxane selon la revendication 1, caractérisée en ce que la phase externe comprend ε-polycaprolactone.

7. Dispersion de polysiloxane selon la revendication 1, caractérisée en ce que la phase externe est constituée d'ester polycarboxylique de bisphénol A d'un poids moléculaire moyen compris entre 500 et 100 000.

8. Dispersion de polysiloxane selon les revendications 1 à 7, caractérisée en ce que le polyorganosiloxane réticulable en trois dimensions dérive d'unités siloxane de formule générale
-(R₂SiO)- (1)
dans laquelle les deux restes monovalents R, identiques ou différents, sont des groupes alkyl linéaires ou ramifiés comportant 1 à 18 atomes de carbone, cycloaliphatiques, comportant 4 à 8 atomes de carbone, alkényles linéaires ou ramifiés comportant 2 à 4 atomes de carbone, phényle ou alkylphényle dont la chaîne aliphatique comporte 1 à 12 atomes de carbone, dans lesquels le groupe hydrocarboné peut être substitué par un groupe halogène ou hydroxyle, carboxyle, anhydride carboxylique, amino, époxy, alkoxy, ou alkényloxy, ou encore des groupes polyéther ou polyoléfine ou des groupes hydrogène, et dans lesquels les groupes reliés à l'atome de silicium de la chaîne polysiloxane le sont soit directement, soit par l'intermédiaire d'un atome d'oxygène ou d'azote.

9. Dispersion de polysiloxane selon la revendication 8, caractérisée en ce que le polysiloxane est un copolymère bloc dans lequel les restes monovalents R' et R'' le long de la chaîne du siloxane sont en blocs, qui consistent en blocs d'unités polymères de formule générale:
-(R'₂SiO)ₓ-(R''₂SiO)_{y}- (2)
dans laquelle les restes R' et R'', qui ont la même signification que le groupe R, sont différents les uns des autres tandis que les restes de R' et R'' peuvent être identiques ou différents, et x et y sont égaux à 1 ou à des nombres entiers supérieurs.

10. Dispersion des polysiloxane selon les revendications 8 et 9, caractérisée en ce qu'au moins 50% des restes de R, R' et R'' correspondants sont des groupes méthyl et/ou phényl.

11. Dispersion de polysiloxane selon les revendications 1 à 10, caractérisée en ce que les particules de polyorganosiloxane en dispersion dans la phase externe présentent un diamètre de l'ordre de 0,07 à 1 µm.

12. Procédé de préparation de dispersions de polysiloxane selon les revendications 1 à 11, caractérisée en ce que:
a) on prépare une émulsion de 0,1 à 75% en poids d'un polyorganosiloxane réticulable en trois dimensions, liquide en tant que phase dispersée dans 25 à 99,9% en poids de phases extérieures consistant en polyols monomères ou polymères, ou polyglycol éthers linéaires ou ramifiés, polylactones aliphatiques et/ou polycarbonates, liquides à une température comprise entre 20 et 100°C avec 0 à 20% en poids d'un adjuvant, en particulier solvants, émoliants, agents de réticulation, catalyseurs, stabilisants, agents dispersants, agents durcissants, diluants réactionnels et/ou additifs modificateurs de la viscosité de la phase externe, dans laquelle les gouttelettes de polyorganosiloxane présentent un diamètre moyen compris entre 0,002 et 50 µm, et
b) on effectue une réticulation au sein des gouttelettes de polyorganosiloxane de manière connue, pour former des particules durcies.

13. Procédé selon la revendication 12, caractérisée en ce que, dans l'étape (a) on utilise 2 à 50% en poids d'un ou plusieurs polyorganosiloxanes liquides, réticulables en trois dimensions.

14. Procédé selon la revendication 12, caractérisée en ce que, dans l'étape (a), les polyorganosiloxane ou mélange de polyorganosiloxane réticulable présente un poids moléculaire moyen compris entre 1 200 et 30 000.

15. Procédé selon les revendications 12 à 14, caractérisée en ce que le ou les polyorganosiloxanes utilisés sont ensuite dispersés dans un premier milieu liquide qui est effectivement miscible avec la phase externe, et qui ensuite est ajouté à la phase externe et est mélangé avec elle, et dans lequel la réticulation du polyorganosiloxane est exécutée avant, pendant ou après le mélange avec ladite phase externe d'une manière appropriée, et en même temps en ce que le premier milieu de dispersion après la fin du mélange est éliminé partiellement ou totalement.

16. Procédé selon les revendications 12 à 14, caractérisée en ce que le polyorganosiloxane réticulable est ensuite dispersé dans un premier milieu liquide, avec lequel la phase externe n'est pas miscible, puis la dispersion obtenue est mélangée avec ladite phase externe et enfin, le premier milieu de dispersion est éliminé en tout ou partie de manière appropriée, la réticulation du polyorganosiloxane étant effectuée avant, pendant ou après le mélange avec ladite phase externe ou la séparation du premier milieu.

17. Utilisation de dispersions de polysiloxane selon les revendications 1 à 11, en tant que matières premières pour la fabrication de matières plastiques modifiées pour les silicones thermoplastiques, duromères ou élastomères à base de polyuréthanes, polyurées, polyesters saturés et polycarbonates.

## Revendications (Revendications pour l'(les) Etat(s) contractant(s) suivant(s): ES)

1. Procédé de préparation d'une dispersion de polysiloxane, caractérisée en ce que:
a) on prépare une émulsion de 0,1 à 75% en poids d'un polyorganosiloxane réticulable en trois dimensions, liquide en tant que phase dispersée dans 25 à 99,9% en poids de phases extérieures consistant en polyols monomères ou polymères, ou polyglycol éthers linéaires ou ramifiés, polylactones aliphatiques et/ou polycarbonates, liquides à une température comprise entre 20 et 100°C avec 0 à 20% en poids d'un adjuvant, en particulier solvants, émoliants, agents de réticulation, catalyseurs, stabilisants, agents dispersants, agents durcissants, diluants réactionnels et/ou additifs modificateurs de la viscosité de la phase externe, dans laquelle les gouttelettes de polyorganosiloxane présentent un diamètre moyen compris entre 0,002 et 50 µm, et
b) on effectue une réticulation au sein des gouttelettes de polyorganosiloxane de manière connue, pour former des particules durcies.

2. Procédé selon la revendication 1, caractérisée en ce que, dans l'étape (a) on utilise 2 à 50% en poids d'un ou plusieurs polyorganosiloxanes liquides, réticulables en trois dimensions.

3. Procédé selon la revendication 1, caractérisée en ce que, dans l'étape (a), les polyorganosiloxane ou mélange de polyorganosiloxane réticulable présente un poids moléculaire moyen compris entre 1 200 et 30 000.

4. Procédé selon les revendications 1 à 3, caractérisée en ce que la phase externe comprend, en tant que polyols, des glycols aliphatiques linéaires ou ramifiés.

5. Procédé selon la revendication 4, caractérisée en ce que la phase externe comprend, en tant que glycol: éthylène glycol, 1,2- ou 1,3-propanediol, 1,2- ou 1,4-butanediol, 1,6-hexanediol, 2,2,4-triméthylpentane-diol-1,3 et/ou néopentylglycol.

6. Procédé selon les revendications 1 à 3, caractérisée en ce que la phase externe comprend un ou plusieurs polyols polymères d'un poids moléculaire moyen compris entre 200 et 20 000.

7. Procédé selon les revendications 1 à 3, caractérisée en ce que la phase externe comprend: polyéthylène glycol, polypropylène glycol et/ou polytétraméthylène glycol et/ou leurs copolymères.

8. Procédé selon les revendications 1 à 3, caractérisée en ce que la phase externe comprend ε-polycaprolactone.

9. Procédé selon les revendications 1 à 3, caractérisée en ce que la phase externe est constituée d'ester polycarboxylique de bisphénol A d'un poids moléculaire moyen compris entre 500 et 100 000.

10. Procédé selon les revendications 1 à 9, caractérisée en ce que le polyorganosiloxane réticulable en trois dimensions dérive d'unités siloxane de formule générale
-(R₂SiO)- (1)
dans laquelle les deux restes monovalents R, identiques ou différents, sont des groupes alkyl linéaires ou ramifiés comportant 1 à 18 atomes de carbone, cycloaliphatiques, comportant 4 à 8 atomes de carbone, alkényles linéaires ou ramifiés comportant 2 à 4 atomes de carbone, phényle ou alkylphényle dont la chaîne aliphatique comporte 1 à 12 atomes de carbone, dans lesquels le groupe hydrocarboné peut être substitué par un groupe halogène ou hydroxyle, carboxyle, anhydride carboxylique, amino, époxy, alkoxy, ou alkényloxy, ou encore des groupes polyéther ou polyoléfine ou des groupes hydrogène, et dans lesquels les groupes reliés à l'atome de silicium de la chaîne polysiloxane le sont soit directement, soit par l'intermédiaire d'un atome d'oxygène ou d'azote.

11. Procédé selon la revendication 10, caractérisée en ce que le polysiloxane utilisé est un copolymère bloc dans lequel les restes monovalents R' et R'' le long de la chaîne du siloxane sont en blocs, qui consistent en blocs d'unités polymères de formule générale:
-(R'₂SiO)ₓ-(R''₂SiO)_{y}- (2)
dans laquelle les restes R' et R'', qui ont la même signification que le groupe R, sont différents les uns des autres tandis que les restes de R' et R'' peuvent être identiques ou différents, et x et y sont égaux à 1 ou à des nombres entiers supérieurs.

12. Procédé selon les revendications 10 et 11, caractérisée en ce qu'au moins 50% des restes de R, R' et R'' correspondants sont des groupes méthyl et/ou phényl.

13. Procédé selon les revendications 1 à 12, caractérisée en ce que les particules de polyorganosiloxane en dispersion dans la phase externe présentent un diamètre de l'ordre de 0,07 à 1 µm.

14. Procédé selon les revendications 1 à 13, caractérisée en ce que le ou les polyorganosiloxanes utilisés sont ensuite dispersés dans un premier milieu liquide qui est effectivement miscible avec la phase externe, et qui ensuite est ajouté à la phase externe et est mélangé avec elle, et dans lequel la réticulation du polyorganosiloxane est exécutée avant, pendant ou après le mélange avec ladite phase externe d'une manière appropriée, et en même temps en ce que le premier milieu de dispersion après la fin du mélange est éliminé partiellement ou totalement.

15. Procédé selon les revendications 1 à 13, caractérisée en ce que le polyorganosiloxane réticulable est ensuite dispersé dans un premier milieu liquide, avec lequel la phase externe n'est pas miscible, puis la dispersion obtenue est mélangée avec ladite phase externe et enfin, le premier milieu de dispersion est éliminé en tout ou partie de manière appropriée, la réticulation du polyorgano-siloxane étant effectuée avant, pendant ou après le mélange avec ladite phase externe ou la séparation du premier milieu.

16. Utilisation de dispersions de polysiloxane selon les revendications 1 à 15, en tant que matières premières pour la fabrication de matières plastiques modifiées pour les silicones thermoplastiques, duromères ou élastomères à base de polyuréthanes, polyurées, polyesters saturés et polycarbonates.
